# EUROPEAN PATENT APPLICATION

(11) **EP 1 983 625 A1**
(43) Date of publication of application: **22.10.2008**
(21) Application number: 07106390.3
(22) Date of filing: 18.04.2007
(51) Int. Cl.: H02B 13/02

(54) **Removable compartment for use in a functional unit of an electrical switchgear**

(71) Applicant: Eaton Electric B.V., 7559 SC Hengelo (NL)
(72) Inventor: Lammers, Arend Jan Willem, 7558 TV, Hengelo (NL); Schoonenberg, Gerard Cornelis, 7559 CR, Hengelo (NL); Van Thiel, Johannes Josephus Gerardus, 7451 GH, Holten (NL); Schoten, Frederik Paul, 7443 TS, Nijverdal (NL); Van Dijk, Marcel Berend Paul, 7541 CH, Enschede (NL); Leccia, Brad Robert, Bethel Park, PA 15102 (US)
(74) Representative: Hutter, Jacobus Johannes

(57) **Abstract**

Removable compartment (24; 24') for use in a functional unit (10) of an electrical switchgear (5). The functional unit (10) has one side with busbars (11) for connection to other functional units (10) of the electrical switchgear (5) and a further side for connecting outgoing cables to the electrical switchgear (5). The functional units (10) are positioned side to side to form an electrical switchgear (5) with a front face (6) and a rear face (7). The removable compartment further comprises cable terminations (23) for attaching the outgoing cables, and disassembly elements (25, 26, 30, 32) for allowing the removable compartment (24; 24') to be removed from the electrical switchgear (5).

## Description

### Field of the invention

The present invention relates to a removable compartment for use in a functional unit of an electrical switchgear having one side with busbars for connection to other functional units of the electrical switchgear and a further side for connecting outgoing cables to the electrical switchgear.

### Prior art

Known electrical switchgear may be of a compartmentalized type, i.e. the interior of a functional unit is separated in various compartments. One compartment may comprise the busbars and connectors thereto, a further one a switch, interrupter, disconnecter or the like. Bushings penetrate the various compartments for electrical connection and supports give strength to the functional unit, or the compartments may be connected to each other mechanically, leaving open spaces through which conductors are positioned. Distances between primary parts of the switchgear and to the earthed metallic structural parts are determined a.o. by the rated voltage of the switchgear.

British patent publication GB1287301 describes an electrical switchgear cabinet, in which the vacuum switch is removable from the cabinet, using a draw-out type of mechanism. This enables easy replacement of the circuit breaker in case of a failure.

British patent publication GB1328984 discloses a high voltage electrical assembly. A cable terminal may be lowered or raised into a cable compartment of the assembly from an (underground) area.

British patent publication GB1001891 discloses a switchgear installation having a cellular type of arrangement for providing sufficient isolation between similar modules. The modules may be stacked and positioned next to each other, but are not removable.

### Summary of the invention

The present invention seeks to provide a removable compartment for functional units in an electrical switchgear, which also enables to easily and effectively replace parts of the functional unit related to the cable connections. In the rare case that an electrical fault occurs in the cable compartment, it usually results in a lot of damage.

According to the present invention, a removable compartment according to the preamble defined above is provided, in which the functional units are positioned side to side to form an electrical switchgear with a front face and a rear face, the removable compartment comprising cable terminations for attaching the outgoing cables, and disassembly elements for allowing the removable compartment (and possibly also the cable terminations) to be removed from the electrical switchgear. When the primary parts in the removable compartment of the functional unit may be electrically switched off and earthed, then the bus bars of the entire switchgear can remain live. Thus, the entire removable compartment may be interchanged for another removable compartment, or the removable compartment is accessible for replacement of elements therein, while the other functional units of the switchgear can remain in service.

Such an electrical switchgear may comprise a plurality of functional units , e.g. five to seven functional units for a certain application, or even up to ten or twenty functional units for more extensive applications. The front face of the installation may comprise controls and indicators accessible for operators. The rear face might be only accessible for maintenance or during installation of the electrical switchgear.

In one embodiment of the removable compartment according to the present invention, the disassembly elements comprise plates which are removable from the interior of the functional units. Such plates can easily be attached inside the functional units , and easily replaced in case of any damage.

The disassembly elements comprise a drawer type of enclosure in a further embodiment of the present invention. This embodiment allows e.g. easy exchange of an entire drawer type enclosure, but also access to elements inside the removable compartment for piece-by-piece exchange. Drawer type enclosures can easily be attached to the switchgear using known attachments.

In a further embodiment, the removable compartment comprises a pressure relief which allows the removable compartment to be in communication with an exhaust duct of the electrical switchgear in case of increased pressure inside the removable compartment. This assures that any (hot) gasses due e.g. to an electrical failure inside the removable compartment (e.g. arcing) are led out of the switchgear in a defined manner, i.e. away from any location where it may pose a hazard for personnel.

The cable terminations are disconnectable from associated conductors in the electrical switchgear cabinet in a further embodiment. This may e.g. be implemented in the form of quick disconnecting facilities, easily reachable (and/or removable) attachments, remotely operable attachments, etc., and allows to easily draw out the removable compartment from the switchgear.

In an even further embodiment of the present invention, the removable compartment comprises energy-absorbing material, e.g. in the form of plates, ribs, etc., to allow to absorb energy from an electrical fault in the removable compartment. This assures that the structural elements of the switchgear cabinet itself are being protected against damage.

### Short description of drawings

The present invention will be discussed in more detail below, using a number of exemplary embodiments, with reference to the attached drawings, in which
Fig. 1 shows a cross sectional view of a functional unit of the switchgear according to a first embodiment of the present invention;
Fig. 2 shows a perspective view of a switchgear comprising a number of functional units according to the present invention;
Fig. 3 shows a cross sectional view of a functional unit of the switchgear according to a second embodiment of the present invention; and
Fig. 4 shows a cross sectional view of a functional unit of the switchgear according to a third embodiment of the present invention.

### Detailed description of exemplary embodiments

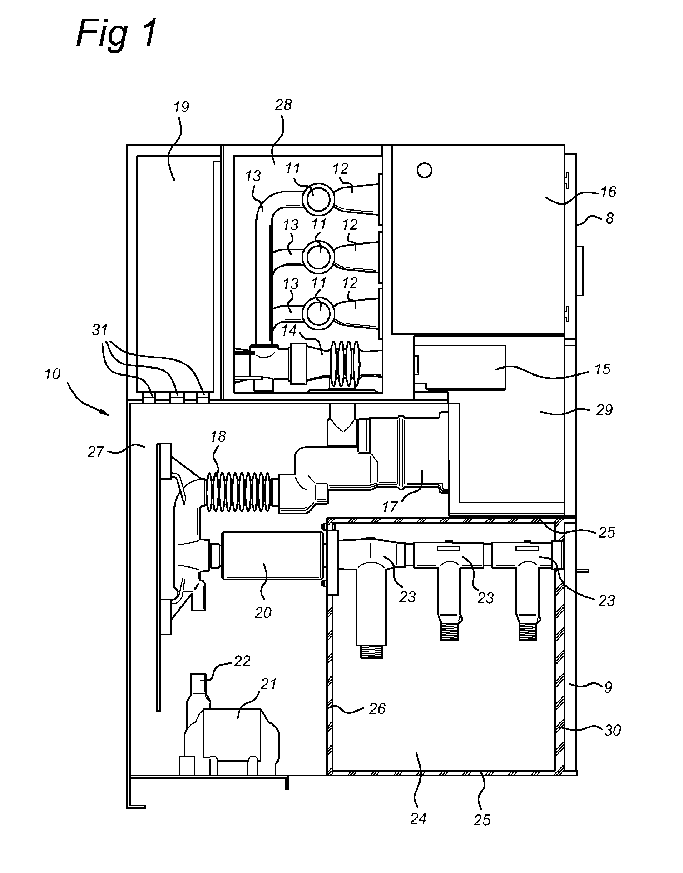

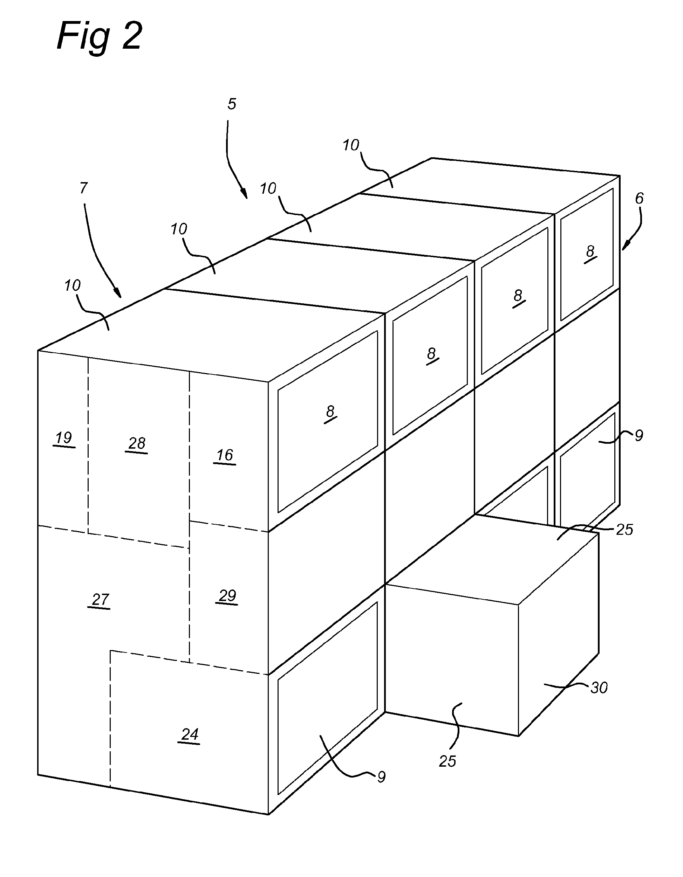

Figure 2 shows an electrical switchgear 5 comprising a number of functional units 10 positioned side by side next to each other. Fig. 1 shows a cross sectional view of a functional unit 10 according to a first embodiment of the present invention. Fig. 2 shows a perspective view of the electrical switchgear 5 comprising four functional units 10. An electrical switchgear 5 may comprise less or more functional units 10. The electrical switchgear 5 may be configured as an electricity distribution system or e.g. a motor control centre, both for driving various electrical loads.

The cabinet of the functional unit 10 is usually compartmentalized, i.e. divided in a plurality of compartments, e.g. as shown in the embodiment of Fig. 1. Usually, the main functional parts (busbar, circuit breaker or switch, etc.) have their own compartment. This allows easy access for service continuity. At the front face 6 of the installation 5, each functional unit 10 is provided with a control panel 8 integrated in or attached to the functional unit 10. Behind the control panel 8, a control compartment 16 is situated. The control compartment 16 comprises various control elements, such as electronics modules, indicators and actuators (not shown).

Behind the control compartment 16, a busbar compartment 28 is located, which comprises busbars 11 (three shown for a three phase system) running parallel to the front face 6 of the switchgear 5. The busbar compartment 28 further comprises the isolating supports 12 for the busbars 11, as well as conductors 13 connected to each of the busbars 11. The functional unit 10 of the embodiment of Fig. 1 further comprises a disconnector 14 and a disconnector mechanism 15 operating the disconnector 14, which are accessible via compartment 29.

Below the busbar compartment 28 a compartment 27 for the main switching device (MSD) may be positioned. A main switching device 17 is connected at one side to the disconnector 14, and at the other side to a conductor 18 with associated supports. The conductor 18 routes the current to a cable compartment 24 (e.g. via a current sensor 20), in which a terminal 23 is positioned for each of the three phases, to which one or more cables may be connected. In the compartment 27 for the main switching device 17, further elements may be positioned, such as a voltage transformer 21. The compartment 27 for the main switching device 17 is in communication with an exhausting duct 19 allowing to route internal gasses from the various compartments outwards the functional unit 10, e.g. in case of a failure (arcing) and subsequent pressure build up. E.g., pressure relief flaps 31 may be provided in the bottom panel of exhausting duct 19.

In case an internal arc occurs in the cable compartment 24 of functional unit 10, damage will result, not only to the cables and cable terminations 23, but also to the surroundings thereof, in particular the side walls of the functional unit 10. Often, the entire switchgear 5 has to be shut down to enable repair of the damage. The present invention provides a solution for an easy and efficient repair of the functional unit 10 in case of such an internal fault.

According to a first embodiment of the present invention shown in Fig. 1, the cable compartment 24 behind panel access wall 9 at the front of the functional unit 10 is formed by a front wall 30, bottom and top wall 25, and a back wall 26. The cable compartment 24 further comprises two side walls 25 (not visible in Fig. 1, but shown in the perspective view of Fig. 2 for one functional unit 10). An easy access to the cable compartment 24 of the functional unit 10 is provided for replacement of damaged parts. The walls 25, 26, 30 may be taken out of the cable compartment separately, to allow access to other elements, or for easy replacement of these walls in case of damage.

The back wall 26 may be formed as a 'weak' panel, e.g. provided with rupture lines or pressure relief plates, in order to break open when the internal pressure in the cable compartment 24 rises due to e.g. arcing. The hot exhaust gasses will then be able to move further in the functional unit 10 towards the exhaust duct 19 (via switch compartment 27 and pressure relief flaps 31).

In an exemplary embodiment, disassembly elements of the cable compartment 24 comprise the back wall 26, in addition to bottom wall 25, two side walls 25 and front wall 30, thus forming a drawer type of cable compartment 24. The cable terminations 23 may be attached to the back wall 26, and provided with sliding contacts co-operating with associated contacts in the switch compartment 27. This allows drawing the entire cable compartment 24 out of the functional unit 10, enabling replacement of the entire cable compartment 24, or easy access for repair or exchange of a limited number of elements in the cable compartment 24. Especially in this case, where it is possible to visually ascertain that the cable terminations 23 are separated from the conductors 18, the rest of the functional unit 10 (or at least the other functional units 10 in the switchgear 5) can remain live during the removal or replacement of a defective component (terminal 23, one or more of the walls 25, 26, 30) in the cable compartment 24.

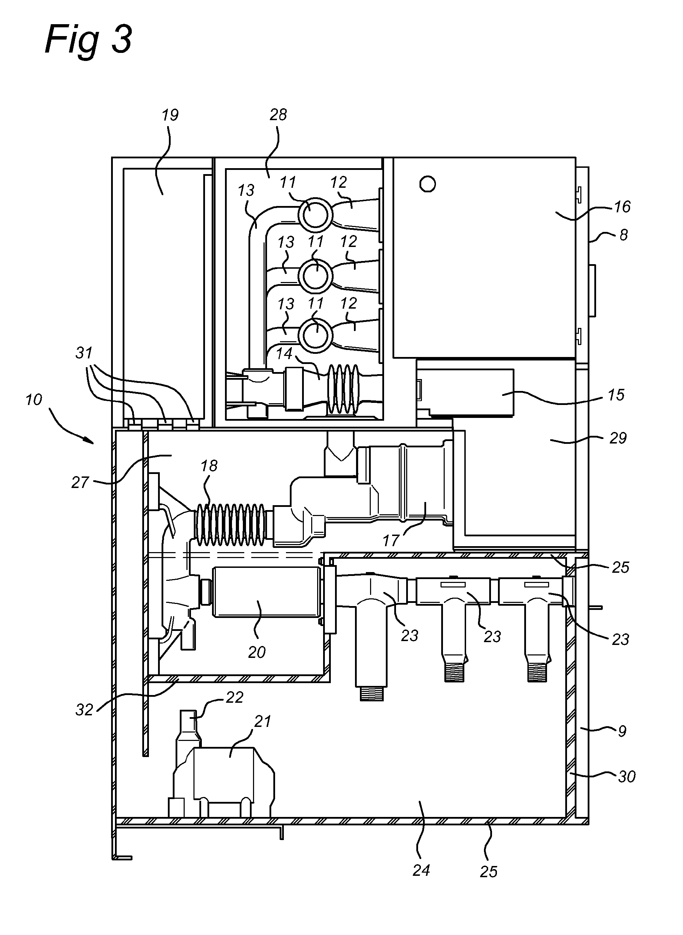

In case of an internal arc occurring in the embodiment of Fig. 1 as described above, other parts (especially high voltage parts) in the switch compartment 27 may get damaged or polluted, as the hot gasses flow through the switch compartment 27 to the exhausting duct 19. To prevent this, a second embodiment is contemplated, in which the cable compartment 24 is extended, having a direct connection to the exhausting duct 19. This embodiment is shown in the cross sectional view of Fig. 3. As a direct connection is made to the exhausting duct 19, the back wall 26 may be omitted. A second top wall 32 is positioned beneath the current sensor 20 in this embodiment. It is noted that, as an alternative, also the top wall 25 may be extended towards the rear face 7 of the functional unit 10, as long as an open connection (e.g. in the form of a one way exhaust flap) towards the exhausting duct 19 is maintained. This is shown as a broken line in Fig. 3. In this embodiment, the elements in the switch compartment 27 (main switching device 17, conductor 18, and possibly the current sensor 20) are protected against damage or pollution in case of an arc occurring in the cable compartment 24. In this second embodiment, the walls 25, 30, 32 forming the protective enclosure of the cable compartment may be replaced separately in case of damage in the cable compartment, or the walls 25, 30, 32 may again form a drawer type of cable compartment 24 (similar to the first embodiment described above).

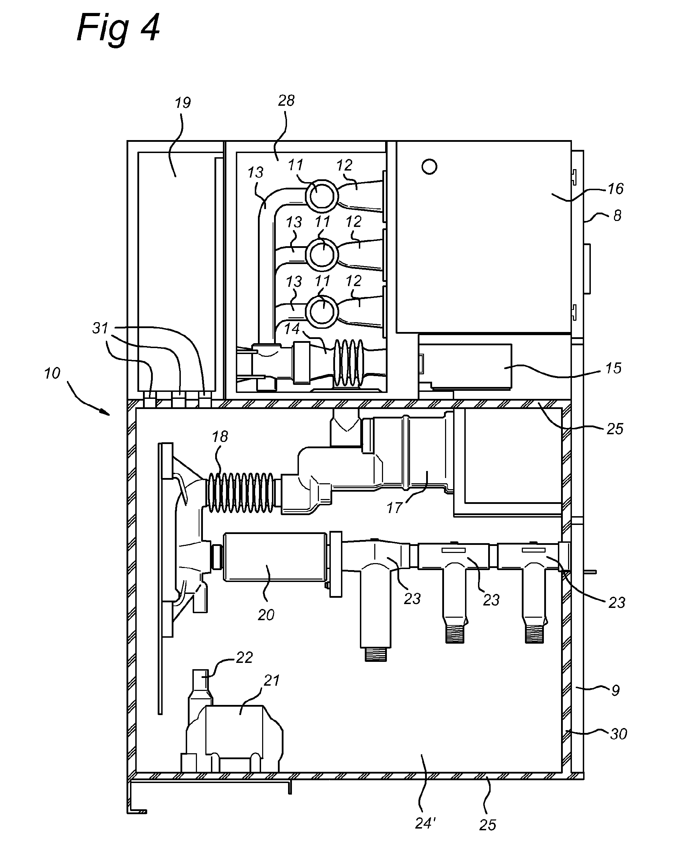

In an even further embodiment, the cable compartment 24 and switch compartment 27 are enclosed as a single combined cable compartment 24', as shown in the cross sectional view of Fig. 4. In comparison to the earlier described embodiments, the top wall 25 is now arranged at the top of combined compartment 24', and the combined compartment 24' now encloses the high voltage elements (main switching device 17, conductor 18, and possibly the current sensor 20) as well as the cable compartment elements (in particular cable terminations 23). When the panel access wall 9 (and front wall 30) extends upward to the top wall 25, the functional unit 10 may be easily opened to access the cable compartment 24. Although an internal fault or arc may now still damage the switch compartment elements, these elements are more readily accessible and can be simply exchanged when necessary or even the whole combined compartment 24' in its entirety can be exchanged. Again, in this third embodiment, the walls 25, 30 forming the protective enclosure of the combined compartment 24' may be replaced separately in case of damage in the combined compartment 24', or the walls 25, 30 may again form a drawer type of combined compartment 24' (similar to the first embodiment described above).

In order to absorb energy originating from an electrical fault in the cable compartment 24, the cable compartment 24 may be provided with energy-absorbing material. E.g. one or more of the side walls 25, bottom wall 25, top wall 25, front wall 30, second top wall 32, when present, may be made of energy absorbing material. This assures that only the (replaceable) parts of the cable compartment 24 are affected by an internal fault, which parts are easy to replace. The elements of the functional unit 10 itself will then be more effectively protected against damage.

In even further embodiments of the present invention the cable compartment 24 with exchangeable elements is extended to the entire set of internal elements of one functional unit 10. This may be implemented by providing the walls of all internal compartments 16, 19, 24, 27, 28, 29 as exchangeable walls (i.e. the internal walls defining the respective compartments), in addition to the side, bottom and top walls 25, 30, which in this embodiment extend over the entire functional unit 10 outer perimeter. The entire set of elements of a single functional unit 10 can then be exchanged when needed, possibly with the exception of the busbars 11, which in general run through all the functional units 10 of an electrical switchgear 5. When the busbars 11 are provided as parts in a single functional unit 11 with connecting elements there between (as disassembly elements), it is even possible to also remove or replace the busbars 11 of a single functional unit 10. To further improve the ease of exchange of a functional unit, the entire functional unit may be provided with e.g. a rail system on which the entire functional unit sits in operation, allowing to remove the entire functional unit 10 (after disassembling or removing the busbars 11 for mechanically separating the functional unit 10 from other functional units 10).

In further embodiments of the present invention, the cable compartment 24 is located at the rear face 7 of the cabinet, and is accessible (or withdrawable) from the rear face 7.

The cable compartment 24 may also extend over the entire depth of the functional unit 10, allowing access or withdrawal from the front face 6, rear face 7, or both. The elements in the switch compartment 27 may then be conveniently located above the cable compartment 24. Alternatively, one or more components of the switch compartment 17, e.g. the combination of conductor 18 and sensor 20 may be positioned in the cable compartment 24. Furthermore it is possible to include all elements starting from the switch 17 downstream (conductors 18, sensor 20, cable terminations 23, auxiliary equipment such as voltage transformer 21) in the withdrawable cable compartment 24.

## Claims

1. Removable compartment (24; 24') for use in a functional unit (10) of an electrical switchgear (5) having one side with busbars (11) for connection to other functional units (10) of the electrical switchgear (5) and a further side for connecting outgoing cables to the electrical switchgear (5),
in which the functional units (10) are positioned side to side to form an electrical switchgear (5) with a front face (6) and a rear face (7),
the removable compartment comprising
- cable terminations (23) for attaching the outgoing cables,
- disassembly elements (25, 26, 30, 32) for allowing the removable compartment (24; 24') to be removed from the electrical switchgear (5).

2. Removable compartment according to claim 1, in which the disassembly elements(25, 26, 30, 32) comprise plates which are removable from the interior of the electrical switchgear (5).

3. Removable compartment according to claim 1, in which the disassembly elements(25, 26, 30, 32) comprise a drawer type of enclosure.

4. Removable compartment according to any one of claims 1-3, in which the removable compartment (24; 24') comprises a pressure relief (26; 31) which allows the removable compartment (24; 24') to be in communication with an exhaust duct (19) of the electrical switchgear (5) in the case of increased pressure inside the removable compartment (24; 24').

5. Removable compartment according to any one of claims 1-4, in which the cable terminations (23) are disconnectable from associated conductors (18) in the electrical switchgear (5).

6. Removable compartment according to any one of claims 1-5, in which the removable compartment (24; 24') comprises energy-absorbing material.
